# EUROPÄISCHE PATENTANMELDUNG

(11) **EP 0 894 429 A1**
(43) Veröffentlichungstag der Anmeldung: **03.02.1999**
(21) Anmeldenummer: 98113962.9
(22) Anmeldetag: 25.07.1998
(51) Int. Cl.: A01G 3/053

(54) **Vorrichtung zum Entblättern von Pflanzen**

(30) Priorität: 29.07.1997 DE 29713466 U
(71) Anmelder: ERO-GERÄTEBAU GmbH, 55469 Niederkumbd (DE)
(72) Erfinder: Petry, Willi, Maschinenbau-Ingenieur, 56290 Uhler (DE)
(74) Vertreter: Patentanwälte Möll und Bitterich

(57) **Zusammenfassung**

Eine Vorrichtung zum Entblättern von in Reihen wachsenden Pflanzen (20, 21) umfaßt ein von einem Motor (4) angetriebenes Sauggebläse (3), ein Messer (2) vor dem Gebläse (3) und ein Schutzgitter (1, 1') vor dem Messer (2). Das Schutzgitter (1, 1') besteht aus einer Anzahl von im wesentlichen waagerecht liegenden, parallelen Gitterstäben. Diese sind profiliert und verdrillt. Der Abstand zwischen Messer (2) und Schutzgitter (1, 1') ist einstellbar. Die Vorrichtung ist an einer langen Parallelführung (17) aufgehängt, deren anderes Ende an einem landwirtschaftlichen Fahrzeug befestigt werden kann. Führungskufen (15, 15') gewährleisten einen einstellbaren Abstand zu den Pflanzen (20, 21).

## Beschreibung

Die Erfindung betrifft Vorrichtungen zum Entblättern von in Reihen wachsenden Pflanzen gemäß dem Oberbegriff des Anspruchs 1. Derartige Vorrichtungen werden insbesondere im Wein- und Obstbau eingesetzt, um die die Früchte verdeckenden Blätter zu beseitigen.

Vorrichtungen zum Entblättern von Pflanzen, auch Laubsauger genannt, sind in verschiedenen Ausführungsformen handelsüblich. Mit Hilfe eines Axial- oder Radialgebläses wird ein Saugluftstrom erzeugt, der die Zweige und Blätter der Pflanzen an die Saugöffnung ansaugt. Dort werden sie mit Hilfe eines rotierenden oder oszillierenden Messers abgeschnitten. Damit bei diesem Schneidvorgang keine Früchte oder Zweige beschädigt werden, ist zwischen Messer und Laubwand ein aus parallelen, waagerechten Gitterstäben bestehendes Schutzgitter angebracht, das nur die Blätter durchlassen soll. Oft bleiben die Blätter jedoch auf einem oder auch auf zwei Gitterstäben liegen; sie streifen dann am Messer vorbei, ohne vollständig abgeschnitten zu werden. Das Arbeitsergebnis ist daher nicht immer zufriedenstellend.

Manche Gerätehersteller versuchen, das Arbeitsergebnis durch Schrägstellen der Gitterstäbe zu verbessern. Dabei werden jedoch erhebliche Scherkräfte auf Laubwand und Früchte ausgeübt, was insbesondere bei weichen und empfindlichen Früchten zu Beschädigungen führt.

Der vorliegenden Erfindung liegt daher die Aufgabe zugrunde, die gattungsgemäße Vorrichtung zur Erzielung eines besseren Arbeitsergebnisses zu verbessern.

Diese Aufgabe wird gelöst durch eine Vorrichtung mit den Merkmalen des Anspruchs 1.

Dank der Verwendung von profilierten und verdrillten Gitterstäben anstelle der üblichen glatten und runden Stäbe wird während der Vorbeifahrt des Geräts an der Laubwand das Abdrehen der Blätter von den Gitterstäben unterstützt, so daß praktisch jedes Blatt direkt in die Messerebene gelangt. Die Blätter bleiben auf den Gitterstäben nicht mehr hängen und werden daher vollständig abgeschnitten.

Gemäß einer vorteilhaffen Weiterbildung der Erfindung besitzen die Gitterstäbe einen dreieckigen Querschnitt mit abgerundeten Kanten. Stäbe mit dieser Querschnittsform schonen die Laubwand mehr als z. B. aus Flachstahl hergestellte Gitterstäbe, bei denen das Abdrehen der Blätter noch etwas besser funktionieren würde.

Vorzugsweise sind die Gitterstäbe entgegen der Wachstumsrichtung der Blätter verdrillt. Bei der Behandlung von Pflanzen, deren Blätter nach oben wachsen, ergibt sich somit das beste Ergebnis, wenn die profilierten Gitterstäbe die Blätter nach unten drehen.

Ein weiterer wesentlichen Vorteil ist mit dem Merkmal der in Längsrichtung verschiebbaren Gitterstäbe verbunden. Sind die Gitterstäbe so eingestellt, daß ihre Enden die Messerbahn komplett überdecken, wie es bei den handelsüblichen Geräten der Fall ist, so ist die Entblätterung minimal. Sind die Gitterstäbe so eingestellt, daß ihre Enden die Messerbahn teilweise freigeben, ist der Grad der Entblätterung maximal. Durch geeignete Zwischenstellungen kann der Anwender somit selbst bestimmen, wie hoch der Grad der Entblätterung sein soll.

Eine weitere Möglichkeit, den Grad der Entblätterung zu beeinflussen, ist dann gegeben, wenn gemäß einer Weiterbildung der Erfindung der Abstand zwischen Messer und Schutzgitter einstellbar ist.

Gemäß einer besonderen Ausgestaltung der Erfindung sind die Enden der Gitterstäbe zum Messer hin abgebogen. Auch diese Maßnahme hat den Zweck, bei Bedarf einen möglichst großen Grad der Entblätterung erreichen zu können.

Gemäß einer Weiterbildung der Erfindung sind Gebläse, Messer und Schutzgitter an einer Parallelführung befestigt. Diese sorgt dafür, daß die erfindungsgemäße Vorrichtung immer in Kontakt mit den Pflanzen steht und immer in der einmal eingestellten Arbeitshöhe. Diese Parallelführung gleicht wechselnde Abstände zwischen der Pflanzenreihe und dem Fahrzeug, an dem sich die erfindungsgemäße Vorrichtung befindet, selbsttätig aus. Dabei ist der Effekt um so besser, je länger diese Parallelführung gemacht wird.

Eine weitere Vergleichmäßigung des Arbeitsergebnisses der erfindungsgemäßen Vorrichtung wird dann möglich, wenn dem Gebläse eine Führungskufe zugeordnet ist, die einen einstellbaren Abstand zu den Pflanzen gewährleistet. Diese Führungskufe besteht vorzugsweise aus einem hochelastischen Material, beispielsweise Polyamid, um die Pflanzen zu schonen.

Führungskufen können oberhalb und/oder auch unterhalb des Gebläses montiert werden. Die jeweilige Position kann entsprechend den Pflanzen und den Früchten ausgewählt werden.

Gemäß einer Weiterbildung der Erfindung läßt sich die Ebene des Schutzgitters gegenüber der Senkrechten kippen. Dies dient zunächst der Anpassung an die Form der Laubwand. Dieses Merkmal bietet aber auch die Möglichkeit, den Grad der Entblätterung individuell zu verändern.

Vorteilhafterweise ist hinter dem Gebläse ein einstellbarer Ausblasbogen angeordnet. Dadurch läßt sich der Saugluftstrom mit den darin mitgeführten Blättern in jede gewünschte Richtung umleiten, z. B. direkt auf den Erdboden.

Gemäß einer bevorzugten Ausgestaltung der Erfindung ist - in Bewegungsrichtung der Vorrichtung - vor dem Schutzgitter ein sanfter Einlaufbogen angeordnet. Dieser sorgt dafür, daß die Pflanzen sich an der Vorrichtung nicht verhaken und dadurch Schaden leiden.

Anhand der Zeichnung soll die Erfindung in Form eines Ausführungsbeispiels näher erläutert werden. Es zeigen
Fig. 1 eine Draufsicht auf eine Vorrichtung zum Entblättern von Pflanzen,
Fig. 2 einen Schnitt durch die Vorrichtung der Fig. 1 entlang der Linie II-II,
Fig. 3 einen Schnitt durch die Vorrichtung der Fig. 1 entlang der Linie III-III,
Fig. 4 eine Detailansicht des Schutzgitters in der Stellung für schwache Entblätterung,
Fig. 5 eine Detailansicht des Schutzgitters in der Stellung für starke Entblätterung und
Fig. 6 die Vorrichtung in Arbeitsstellung.

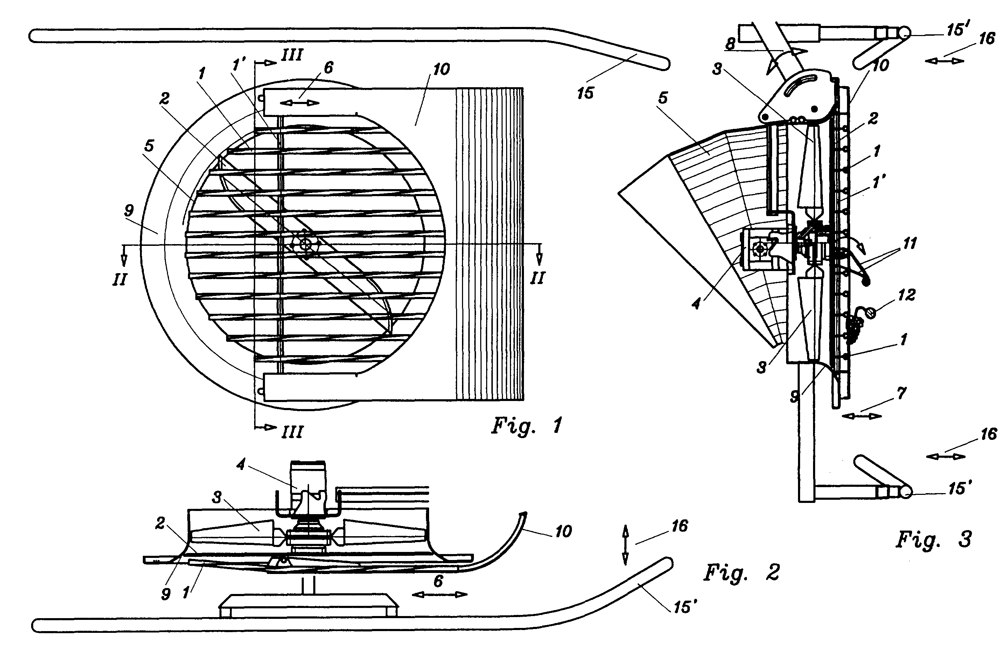

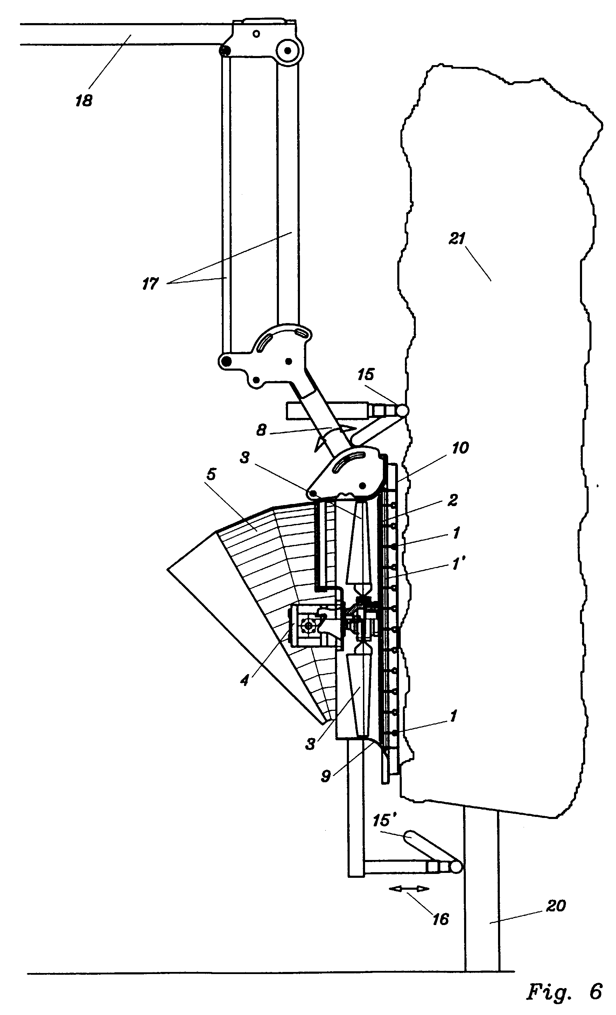

Fig. 1 als Draufsicht sowie die Fig. 2 und 3 als Schnitte zeigen eine Vorrichtung zum Entblättern von in Reihen wachsenden Pflanzen 21 (Fig. 6). Man erkennt hinter einem Schutzgitter 1, 1' mit im wesentlichen waagerecht liegenden, parallelen Gitterstäben 1 ein rotierendes Messer 2 und dahinter Axial-Sauggebläse 3 mit Hydro-Motor 4. Messer 2 und Gebläse 3 sitzen in einem strömungsgünstigen Ansaugtrichter 9, an den sich ein einstellbarer Ausblasbogen 5 anschließt. In Fahrtrichtung vor dem Schutzgitter 1, 1' ist ein sanfter Einlaufbogen 10 angeordnet, der ein Verhaken der Laubwand mit der Vorrichtung verhindert.

Die parallelen Gitterstäbe 1 besitzen ein Dreieck-Profil. Außerdem sind sie so verdrillt, daß die an ihren Stielen aufwärts wachsenden Blätter 11 (Fig. 3), die vom Saugluftstrom angesaugt auf den Gitterstäben 1 hängenbleiben wollen, aufgrund der Vorwärtsbewegung der Vorrichtung nach unten abgedreht werden, um anschließend vom Messer 2 abgeschnitten zu werden.

Die gegenseitigen Abstände der Gitterstäbe 1 sind auf die Größe der Früchte 12 (Fig. 3), hier Trauben, abgestimmt, so daß die Früchte nicht in die Messerbahn gelangen können.

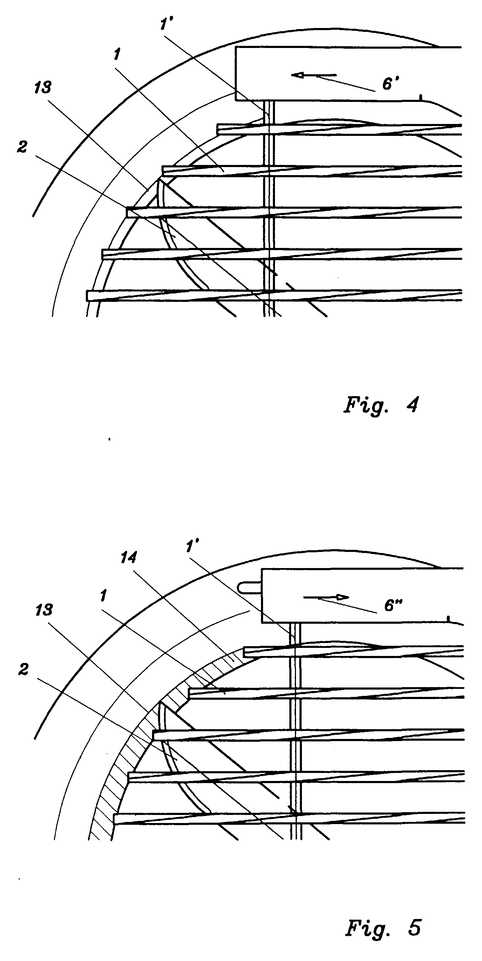

Ein Doppelpfeil 6 in Fig. 2 deutet an, daß die Gitterstäbe 1 vorwärts und rückwärts verschoben werden können. Dies soll anhand der Fig. 4 und 5 noch näher erläutert werden.

Ein Doppelpfeil 7 in Fig. 3 deutet an, daß der Abstand zwischen Schutzgitter 1, 1' und Messer 2 verändert werden kann, um den Grad der Entblätterung zu steuern.

Wie insbesondere die Fig. 2 und 3 gut erkennen lassen, sind dem Gebläse 3 zwei Führungskufen 15, 15' zugeordnet, jeweils eine oberhalb und eine unterhalb des Gebläses 3. Der Abstand zwischen Gebläse 3 und Führungskufen 15, 15' ist einstellbar, was durch die Doppelpfeile 16 angedeutet wird. Die Führungskufen 15, 15' legen sich gegen die Oberfläche der Pflanzen und sorgen so für einen zwar einstellbaren, aber konstanten Abstand zwischen den Pflanzen 21 und Schutzgitter 1, 1', Messer 2 und Gebläse 3.

Schließlich erkennt man in Fig. 3 noch ein Gelenk 8, mit dessen Hilfe die Ebene des Schutzgitters 1, 1' sich gegenüber der Senkrechten kippen läßt. Dadurch läßt sich die Arbeitsebene an die Form der Laubwand anpassen und der Grad der Entblätterung in verschiedenen Höhen steuern.

Fig. 4 zeigt einen Ausschnitt aus Fig. 1 in vergrößertem Maßstab. Durch eine gestrichelte Linie 13 ist die Laufbahn des Messers 2 kenntlich gemacht. Die Gitterstäbe 1 sind entsprechend dem Pfeil 6' so verschoben, daß ihren Enden die Laufbahn 13 des Messers 2 völlig überdecken. In dieser Stellung ist der Grad der Entblätterung minimal.

Fig. 5 zeigt den gleichen Ausschnitt aus Fig. 1. Jetzt sind die Gitterstäbe 1 jedoch entsprechend dem Pfeil 6'' in die andere Richtung verschoben, so daß zwischen der Laufbahn 13 des Messers 2 und den Enden der Gitterstäbe 1 ein Bereich 14 entstanden ist, wo Blattfragmente, die nicht von den Gitterstäben 1 abgedreht werden konnten, und Stiele dem Messer 2 direkt zugeführt werden.

Fig. 6 zeigt die Vorrichtung der Fig. 1 bis 5 in Arbeitsstellung zum Entblättern von in Reihen wachsenden Pflanzen 20, 21. Führungskufen 15, 15' liegen in unterschiedlichen Höhen an den Pflanzen 20, 21 an und steuern so den Abstand zwischen der Laubwand der Pflanzen 21 und dem Schutzgitter 1, 1' bzw. dem Messer 2.

Wie Fig. 6 des weiteren erkennen läßt, hängt der Laubsauger an einer langen Parallelführung 17, die ihrerseits an einer Tragstange 18 montiert ist, deren anderes Ende an einer landwirtschaftlichen Zugmaschine (nicht dargestellt) montiert wird. Dank der Parallelführung 17 kann der Laubsauger 1 ... 15' seitlich pendeln, wobei sich Arbeitshöhe und Arbeitsabstand nicht verändern. Die Parallelführung gleicht somit Ungenauigkeiten in der Spurführung des landwirtschaftlichen Fahrzeugs aus.

Abschließend sei noch darauf hingewiesen, daß das erfindungsgemäße Prinzip nicht nur bei Entblätterungsvorrichtungen verwirklicht werden kann, die wie im vorliegenden Ausführungsbeispiel mit Axialgebläse und rotierendem Messer arbeiten, sondern auch bei Vorrichtungen, die mit Radialgebläsen und oszillierenden Messern arbeiten.

## Patentansprüche

1. Vorrichtung zum Entblättern von in Reihen wachsenden Pflanzen (21), umfassend
- ein Sauggebläse (3),
- ein Messer (2) vor dem Gebläse (3)
- und ein Schutzgitter (1, 1') vor dem Messer (2),
-- bestehend aus einer Anzahl von im wesentlichen waagerecht liegenden, parallelen Gitterstäben (1),
gekennzeichnet durch die Merkmale:
- die Gitterstäbe (1) sind
-- profiliert
-- und verdrillt,
- das Schutzgitter (1, 1') ist in Längsrichtung der Gitterstäbe (1) verschiebbar, so daß die Enden der Gitterstäbe (1)
-- in der einen Endstellung das Messer (2) ganz überdecken,
-- in der anderen Endstellung das Messer (2) teilweise freigeben.

2. Vorrichtung nach Anspruch 1, gekennzeichnet durch das Merkmal:
- der Abstand zwischen Messer (2) und Schutzgitter (1, 1') ist einstellbar.

3. Vorrichtung nach Anspruch 1 oder 2, gekennzeichnet durch das Merkmal:
- die Enden der Gitterstäbe (1) sind zum Messer (2) hin abgebogen.

4. Vorrichtung nach einem der Ansprüche 1 bis 3, gekennzeichnet durch das Merkmal:
- die Gitterstäbe (1) besitzen einen dreieckigen Querschnitt mit abgerundeten Kanten.

5. Vorrichtung nach einem der Ansprüche 1 bis 4, gekennzeichnet durch das Merkmal:
- die Gitterstäbe (1) sind entgegen der Wachsturnsrichtung der Blätter (11) verdrillt.

6. Vorrichtung nach einem der Ansprüche 1 bis 5, gekennzeichnet durch das Merkmal:
- Gebläse (3), Messer (2) und Schutzgitter (1, 1') sind an einer Parallelführung (17) befestigt.

7. Vorrichtung nach einem der Ansprüche 1 bis 6, gekennzeichnet durch das Merkmal:
- dem Gebläse (3) ist eine Führungskufe (15, 15') zugeordnet, die einen einstellbaren Abstand zu den Pflanzen (21) gewährleistet.

8. Vorrichtung nach Anspruch 7, gekennzeichnet durch das Merkmal:
- die Führungskufe (15, 15') befindet sich ober- und/oder unterhalb des Gebläses (3).

9. Vorrichtung nach Anspruch 7 oder 9, gekennzeichnet durch das Merkmal:
- die Führungskufe (15, 15') besteht aus einem elastischen Material, vorzugsweise Polyamid.

10. Vorrichtung nach einem der Ansprüche 1 bis 9, gekennzeichnet durch das Merkmal:
- die Ebene des Schutzgitters (1, 1') läßt sich gegenüber der Senkrechten kippen.

11. Vorrichtung nach einem der Ansprüche 1 bis 10, gekennzeichnet durch das Merkmal:
- hinter dem Gebläse (3) ist ein einstellbarer Ausblasbogen (5) angeordnet.

12. Vorrichtung nach einem der Ansprüche 1 bis 11, gekennzeichnet durch das Merkmal:
- vor dem Schutzgitter (1, 1') ist ein sanfter Einlaufbogen (10) angeordnet.

13. Vorrichtung nach einem der Ansprüche 1 bis 12, gekennzeichnet durch das Merkmal:
- Messer (2) und Sauggebläse (3) sind in einem strömungsgünstigen Ansaugtrichter (9) untergebracht.
